# EUROPEAN PATENT SPECIFICATION

(11) **EP 2 432 614 B1**
(45) Date of publication and mention of the grant of the patent: **10.07.2013**
(21) Application number: 09838544.6
(22) Date of filing: 21.05.2009
(51) Int. Cl.: B23D 45/14, B23D 47/04, B27M 1/08, B27C 9/04

(54) **MACHINE TOOL**
MASCHINENWERKZEUG
MACHINE-OUTIL

(43) Date of publication of application: 28.03.2012
(73) Proprietor: Emmegi S.P.A., 41010 Limidi di Soliera (IT)
(72) Inventor: CAIUMI, Andrea, I-41012 Carpi (MO) (IT)
(74) Representative: Crugnola, Pietro
(86) International application number: PCT/IB2009/005675
(87) International publication number: WO 2010/133912

(56) References cited:
- WO-A2-98/01257
- DE-A1- 4 116 769
- DE-A1- 10 013 970
- US-A- 4 574 670
- US-B1- 6 212 983

## Description

The invention relates to a machine tool for machining elongated elements, as per the preamble of claim 1, in particular metal and/or plastic profiled elements, frames of fixtures, such as, for example, windows, French doors, doors, shutters and the like. An example of such machine tool is disclosed by US 6 212 983 B1. Machine tools are known that are commonly called cutting-off machines, that comprise a cutting unit provided with a rotating-disc blade or saw that is suitable for interacting with an elongated element to be machined, supported and clamped by suitable supporting means. The latter generally has a plurality of clamps that are spaced apart from one another and are aligned along a first direction X that is substantially parallel to a longitudinal axis of the element. The clamps engage and clamp the elongated element, which can be machined appropriately by the cutting unit.

The latter is generally movable along an advancing direction Y that is almost orthogonal to the first direction X, for example horizontal or vertical, automatically driven by suitable movement means.

Alternatively, the cutting unit can be rotatable around a rotation axis that is parallel to the first direction X and orthogonal to a plane on which lies the disc blade, the latter thus being movable according to an arched advancing trajectory.

Cutting-off machines exist in which the cutting unit is mounted rotatably around a rotation axis that is almost orthogonal to the first direction X and lies on the plane that contains the disc blade, in order to perform cuts at different angles.

Some cutting units are rotatable around a second rotation axis that is orthogonal to the first rotation axis and to the first movement direction X to perform combined rotations. In cutting-off machines with a rotationally movable cutting unit the cut is made by moving the element to be machined manually along the advancing direction Y.

A drawback of the cutting-off machine tools disclosed above is that each of them enables a set and limited type of machinings to be performed on the elongated element. In the case of several consecutive machinings, for example facing cuts at the ends of the element, or complex machinings, such as angled cuts or cuts requiring a plurality of successive blade actions, or machinings to be performed on various sides of the element, it is necessary to reposition the latter manually on the supporting means of the machine or even to transfer the element to a different machine tool.

Subsequent repositioning of the element to be machined may also compromise, owing to positioning errors and/or imprecisions, the quality and the accuracy of the machinings, which may have dimensions or geometry that are different from those requested.

Another drawback of such machines lies in the need to provide one or more operators, with a consequent increase in production costs, to perform the tasks manually that are necessary for removing and repositioning the element to be machined. Such tasks are slow and laborious and cause a considerable increase in total machining time of each element and thus a corresponding decrease in the productivity of the machine tool.

Further, in addition to committing errors and imprecisions in positioning and clamping the element, the operator may accidentally injure himself by coming into contact with sharp corners of the element made in a preceding machining. A further drawback of certain known machines consists of the manual movement of the elements to be machined in the advancing direction, which in addition to being tiring for the operator is generally slow and subject to errors and imprecisions that may adversely affect the quality of the machining.

Still another drawback of the machine tools disclosed above is that if cuts have to be made, especially tilted or angled cuts, on elements having cross sections of significant dimensions, it is necessary to use blades of appropriate dimensions to perform the operation in a single pass, in order to avoid having to reposition the element.

A still further drawback of the machine tools disclosed above is that the latter have to extend significantly in length in order to be able to machine elongated elements that extend particularly along the first direction X.

An object of the invention is to improve machine tools for machining elongated elements, in particular frame profiled elements.

Another object is to make a machine tool that enables a plurality of different machinings to be performed on an element to be machined automatically without requiring manual intervention by the operator.

A further object is to obtain a machine tool that is able to perform a plurality of machinings by maintaining the elements to be machined always positioned and fixed to supporting means of the machine.

Still another object is to make a machine tool that enables complex and composite machinings to be performed with one or more actions of the cutting tool.

A still further object is to obtain a machine tool that enables productivity to be increased compared with known machine tools, in particular for complex machinings.

A still further object is to obtain a machine tool having a reduced longitudinal extent compared with known machine tools for the same length of the elongated elements to be machined.

According to the invention, a machine tool is provided for machining elongated elements as defined in claim 1.

Owing to this aspect of the invention it is possible to obtain a machine tool that performs a plurality of different machinings on an element to be machined in an automatic manner, without requiring manual intervention by operators. In particular, the machine tool according to the invention is able to perform a plurality of machinings, maintaining the element always positioned and fixed to supporting means.

In addition to the possibility of rotating the element around a longitudinal rotation axis, the cutting unit can be moved in translation according to three controlled motion axes whilst the disc blade can be rotated around a further rotation axis, which is also controlled.

The possibility of moving the cutting unit in translation along three motion axes gives the machine tool significant flexibility in use.

In particular, in fact, the possibility of moving the cutting unit along the first direction X that is substantially parallel to a longitudinal axis of the element to be machined enables machinings to be performed on elements having a greater longitudinal extent for the same overall dimensions of the machine tool, compared with the elements that can be machined by machine tools of known type.

The possibility of moving the cutting unit along the first direction X enables a machine tool to be arranged that extends in length to a lesser extent than machine tools of known type, for the same length of element to be machined.

The degrees of liberty of movement of which the element to be machined disposes, the cutting unit and the disc blade enable the machine tool to perform complex and composite machinings with one or more successive actions of the cutting blade. Further, the possibility of moving the cutting unit and the elongated element towards one another enables the machinings to be made more rapid.

As the aforementioned machinings can be performed automatically on the element, i.e. without the need to dismantle and reposition the element on the supporting means, the productivity of a machine tool according to the invention is significantly greater than that of known machine tools. This further enables more precise and accurate machinings to be obtained, avoiding mounting and positioning errors and imprecisions that may occur following manual repositioning of the element by an operator.

The invention can be better understood and implemented with reference to the attachments that illustrate an embodiment thereof by way of non-limiting example, in which:
Figure 1 is a schematic front view of the machine tool according to the invention, in association with an elongated element to be machined and in an operating condition;
Figure 2 is a top plan view of the machine in Figure 1, in a further operating condition;
Figure 3 is a section according to a plane III-III of Figure 1, showing a cutting unit and supporting means in a non-operating condition;
Figure 4 is a section like that in Figure 3, showing the cutting unit and the supporting means in an operating condition;
Figures 5A to 5L illustrate different machinings that are performable with the machine in Figure 1 on an element to be machined;
Figures 6A to 6D illustrate further machinings that are performable with the machine in Figure 1.

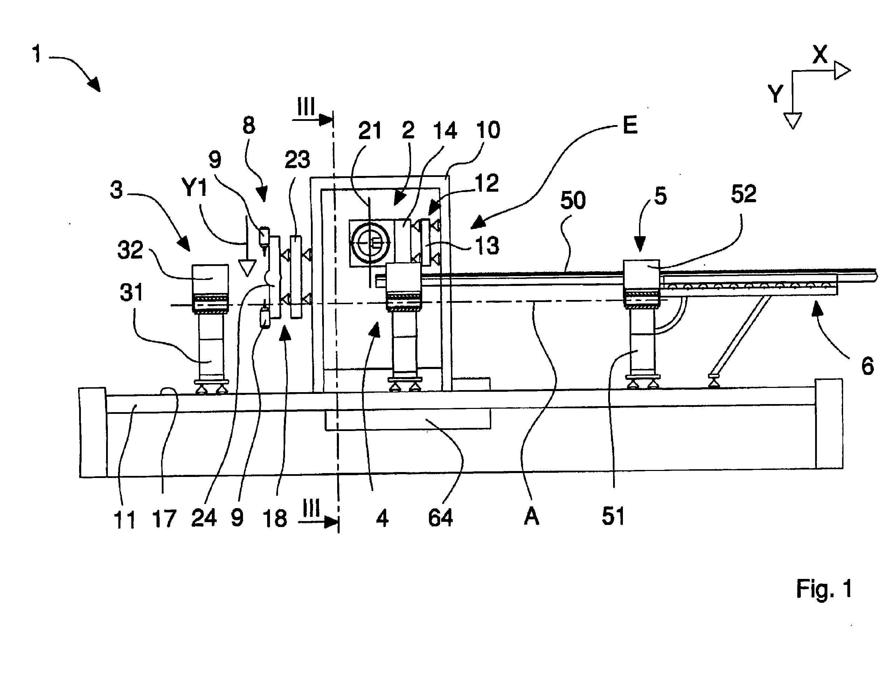

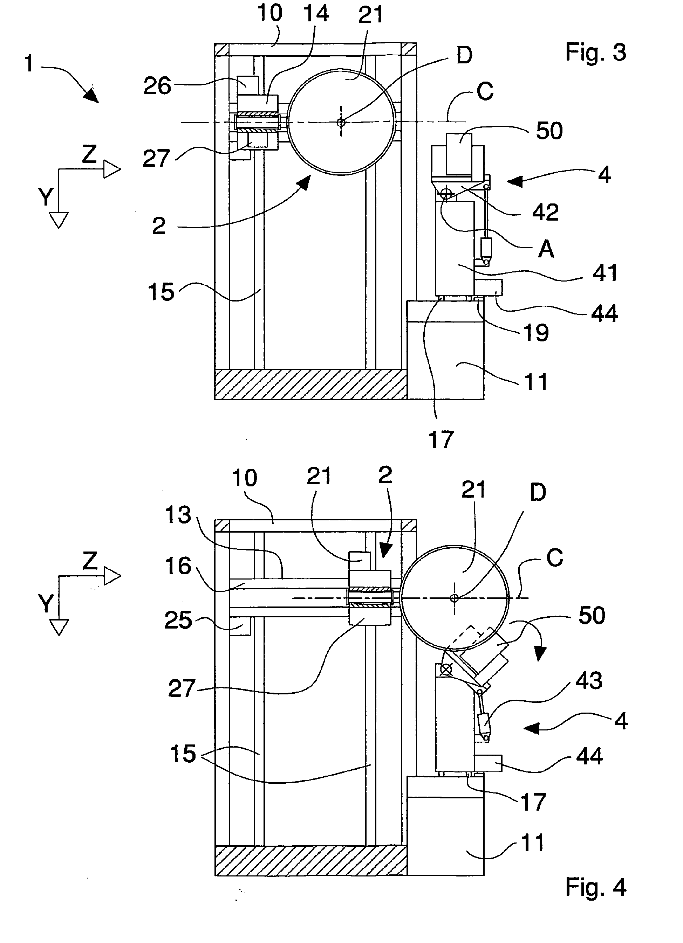

With reference to Figures 1 to 4, there is illustrated a machine tool 1 for machining elongated elements 50, in particular metal and/or plastic profiled elements used in the window and door-frames industry to make frames of fixtures such as, for example, windows, French doors, doors, shutters and the like.

The machine tool 1 comprises a cutting unit 2 that rotatably supports a disc blade or saw 21 and supporting means 3, 4, 5 arranged for supporting an elongated element 50 to be machined.

The machine tool 1 further comprises driving means that is suitable for moving the cutting unit 2 and/or the supporting means 3, 4, 5 so as to cause an interaction between the element 50 to be machined and the disc blade 21.

The disc blade 21 is, for example, of the type without a flange, that is also usable for passing again over previously cut surfaces to obtain a more precise geometry and a more regular and homogenous finish.

The supporting means 3, 4, 5 is configured so as to enable the elongated element 50 supported thereby to perform a rotation around a first rotation axis A coinciding with, or parallel to, a longitudinal axis of the elongated element 50.

The supporting means comprises a plurality of clamping devices, for example a first clamping device 3, a second clamping device 4 and a third clamping device 5 which are slidably supported by a base 11 of the machine tool 1 and are movable along a first movement direction X that is substantially parallel to the first rotation axis A.

In particular, the clamping devices 3, 4, 5 are mounted slidably on rail means 17 of the base 11 of the machine tool 1 and are arranged aligned along the first movement direction X to support and clamp an elongated element 50. The cutting unit 2 is slidably supported by frame means 10 slidably connected to the base 11 of the machine tool 1. In particular, the cutting unit 2 is connected to the frame means 10 so as to be movable along a first advancing direction Y and along a second advancing direction Z that are substantially orthogonal to one another and to the first rotation axis A.

The driving means of the machine tool comprises first motor means 64, of electric and rotational type, connected to the frame means 10 and comprising a pinion 66.

The first motor means 64 is controlled by a control and management unitof the machine tool 1, which is of known type and is not illustrated in the figures.

Near the first motor means 64, transmission means 63 is fixed to the base 11, the transmission means 63 comprising, for example, a first rack 65 that is suitable for engaging with a toothed wheel of the pinion 66 that is rotatable by the first motor means 64 to convert a rotating movement of the pinion 66 in a linear movement of the cutting unit 2.

In this manner, the first motor means 64 enables the cutting unit 2 to be movable also along a second movement direction X1, that is substantially parallel to the first rotation axis A.

In an embodiment that is not shown, the linear movement along the second movement direction X1 of the cutting unit 2 is obtained via linear motor means that does not require transmission means.

In order to be movable along the first advancing direction Y and along the second advancing direction Z, the cutting unit 2 is fixed to the frame means 10 via connecting means 12 comprising, for example, a first carriage 13 and a second carriage 14.

The first carriage 13 is slidable along first guides 15 of the frame means 10, substantially parallel to the first advancing direction Y and slidably supports the second carriage 14. The latter in fact engages with second guides 16 of the first carriage 13 that are substantially parallel to the first movement direction X.

The driving means of the machine tool further comprises second motor means 25 and third motor means 26 configured for moving respectively the first carriage 13 along the first advancing direction Y and the second carriage 14 along the second advancing direction Z.

The cutting unit 2 is thus movable along the first advancing direction Y, along the second advancing direction Z and along the second movement direction X1.

The cutting unit 2 is provided with a supporting arm 22 that is suitable for rotatably supporting the disc blade 21.

The supporting arm 22 is mounted rotatably around a second rotation axis C, that is almost orthogonal to a revolution axis D around which the disc blade 21 rotates during cutting. The second rotation axis C is further almost parallel to the second advancing direction Z and is thus almost orthogonal to the first rotation axis A.

The supporting arm 22 is rotated by an actuating device 27 of the driving means located on the cutting unit 2.

The disc blade 21 is thus movable in translation along two axes that are orthogonal to one another (advancing directions Y, Z) and lie on a plane that is orthogonal to the first movement direction X, and along an axis (movement direction X1) that is parallel to said first movement direction X and rotates around a further axis (second rotation axis C). The aforesaid movement axes are of the numeric control type (CNC) managed by the management and control unit that manages and controls the machine tool 1. The driving means comprises fourth motor means 34, fifth motor means 44 and sixth motor means 54 arranged for moving independently respectively the first clamping device 3, the second clamping device 4 and the third clamping device 5. Motion transmission means is provided to enable the aforesaid motor means 34, 44, 54 to move the respective clamping devices 3, 4, 5.

Said transmission means includes, for example, a second rack 19 fixed to the base 11 of the machine tool 1 and engaged by toothed wheels of the motor means, of electric and rotational type.

Also the motor means 34, 44, 54 is controlled by a control and management unit of the machine tool 1, which is of known type and is not illustrated in the figures, so as to arrange the clamping devices 3, 4, 5 in a plurality of different positions, in function of the dimensions of the element 50 to be machined and/or of the machinings to be performed on the latter.

In addition to that, the motor means 34, 44, 54 enables the clamping devices 3, 4, 5 to advance and move the element 50 automatically with respect to the cutting unit 2 along the first movement direction X.

Each clamping device 3, 4, 5 comprises a respective supporting element 31, 41, 51 that is suitable for rotatably supporting a respective clamp 32, 42, 52. In particular, each clamp 32, 42, 52 is able to perform a rotation around the first rotation axis A, by a desired angle comprised between 0° and 360°, in particular between 0° and 90°.

For this purpose, the driving means comprises first actuating means 33, second actuating means 43 and third actuating means 53, associated respectively with the first clamping device 3, with the second clamping device 4 and with the third clamping device 5 to rotate the respective clamps 32, 42, 52.

The actuating means 33, 43, 53 are, for example, linear electric actuators, controlled by the control and management unit so as to rotate in a coordinated manner in the same rotation direction and by the same angular degree the elongated element 50.

The clamps 32, 42, 52 of the clamping devices 3, 4, 5 are thus movable in translation (first movement direction X) and rotationally movable (first rotation axis A) according to movement axes of the numeric control type (CNC), managed by the management and control unit of the machine tool 1.

Each clamp 32, 42, 52 comprises at least a pair of respective opposite jaws that are suitable for clamping opposite sides of the element 50.

The machine tool 1 is further provided with further supporting means 6, arranged for slidably supporting the elongated element 50 and comprising, for example, a roller conveyor extending in the first movement direction X and associated with the third clamp device 5. The roller conveyor enables the elongated elements 50 to be positioned and supported before they are supported and clamped by the supporting means 3, 4, 5.

In an embodiment of the machine tool that is not shown, the roller conveyor 6 is not associated with the third clamping device 5, but provided with a respective supporting element slidably fixed to the rail means 17 of the base 11 of the machine tool, and driven independently by respective motor means, which is also controlled by the management and control unit.

The machine tool 1 may further comprise a milling unit 8 connected to the frame means 10 so as to be movable along a third advancing direction Y1 and along a fourth advancing direction Z1 that are orthogonal to one another. In particular, the third advancing direction Y1 and the fourth advancing direction Z1 are almost parallel respectively to the first advancing direction Y and to the second advancing direction Z of the cutting unit 2.

For this purpose, the milling unit 8 is fixed to the frame means 10 by further connecting means 18 comprising, for example, a third carriage 23 and a fourth carriage 24. The third carriage 23 is slidable along respective guides fixed to the frame means 10 and substantially parallel to the third advancing direction Y1.

The fourth carriage 24 is in turn slidably connected to respective guides of the third carriage 23, substantially parallel to the fourth advancing direction Z1.

The milling unit 8 is provided with a pair of opposite spindles 9 fixed to the fourth carriage 24 and arranged for using a plurality of interchangeable tools.

The milling unit 8 is moved along the two advancing directions Y1, Z1 by further driving means, which are of known type and are not illustrated, controlled by the machine tool control and management unit 1.

The operation of the machine tool 1 according to the invention provides for a cutting cycle of an elongated element 50 positioning the latter on the roller conveyor 6 at the third clamping device 5.

In order to perform a facing or end cut on the element 50, in order to create a precise reference surface for the subsequent machinings, the third clamping device 5 moves the element 50 in the first movement direction X as far as a first work position E in which a free end of the element 50 faces the cutting unit 2. In this first work position E the element 50 is also supported and clamped by the second clamping device 4 (Figure 1).

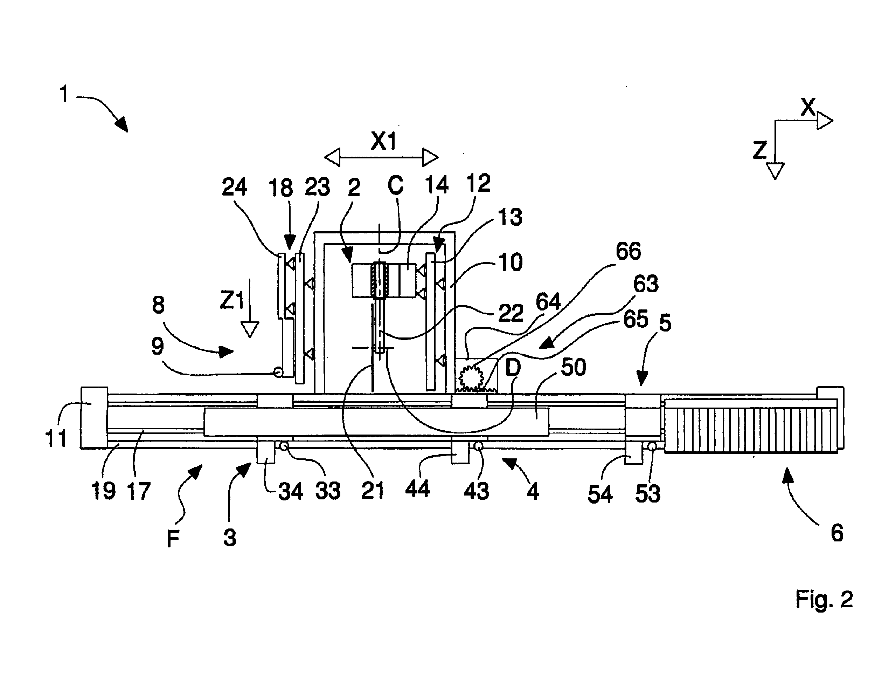

When the facing cut has been completed, the third clamping device 5 is driven so as to position the element 50 in a second work position F, between the clamps 32, 42 of the first clamping device 3 and of the second clamping device 4 (Figure 2). The latter are positioned suitably spaced apart so as to limit the flexure of the element 50 during cutting and avoid the start of vibrations that could compromise the quality and precision of the cut.

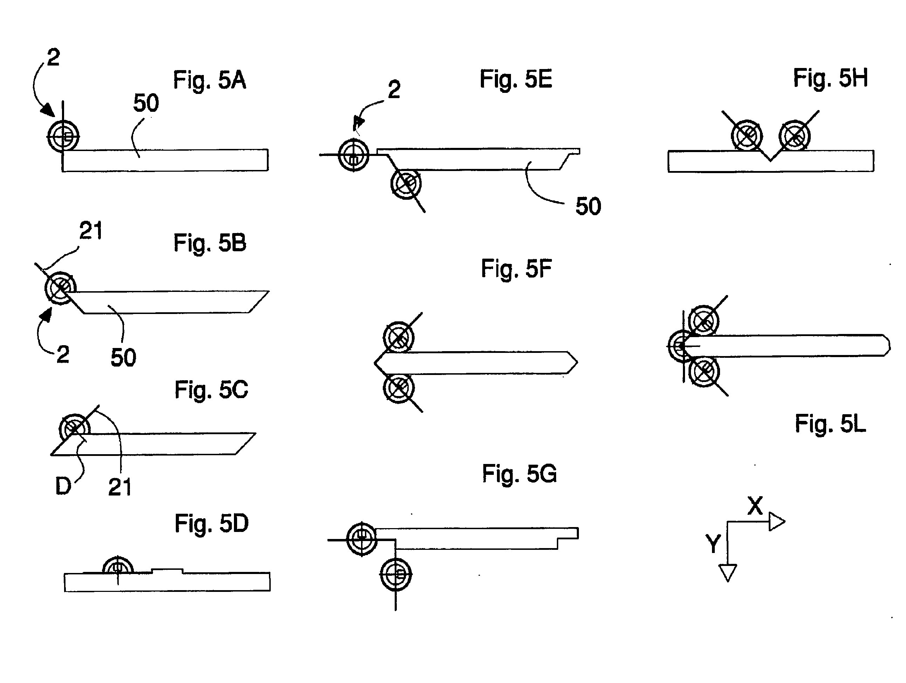

Once cutting-off has been performed, the portion of element obtained, comprised between the clamping device 3 and the second clamping device 4, can be subjected to subsequent machinings, for example simple and composite cuts, as illustrated in Figures 5A to 5L.

These cuts are obtainable by suitably rotating the disc blade 21 of the cutting unit 2 and suitably moving the latter and/or the clamping devices 3, 4, i.e. the element 50, respectively along the advancing directions Y, Z and the first movement direction X.

The cutting unit 2 is able to perform machinings that require a sole pass or action of the blade (Figure 5A-5D), two subsequent actions (Figure 5E-5H), three subsequent actions (Figure 5L).

The tilted or angled cuts illustrated in Figures 5B, 5C, 5E, 5F, 5H, 5L are achieved by moving in step, in a suitably coordinated manner, the cutting unit 2 and the element 50 to be machined.

In the case of horizontal longitudinal cuts (Figure 5D, 5E, 5G) the disc blade 21 is maintained in position, rotating around the revolution axis D, whilst the element 50 is moved suitably along the first movement direction X. Alternatively, in the case of horizontal longitudinal cuts (Figure 5D, 5E, 5G) the cutting unit 2, and thus the disc blade 21, rotating around the revolution axis D, can be moved suitably along the second movement direction X1 whilst the element 50 can be maintained in position or moved along the first movement direction X to the cutting unit 2.

The possibility of rotating the element 50 according to the first rotation axis A further enables machinings to be performed on various sides of the element 50 and/or particular composite machinings to be performed, for example making pyramid-shaped elements or squareness elements.

The machine tool 1 enables a series of successive machinings to be performed on the element 50, maintaining the latter supported and clamped by the supporting means 3, 4, 5. For example, the element 50 can be supported and clamped by the first clamping device 3 and by the second clamping device 4 to be subjected to two successive 45° end cuts. After the first cut has been performed, the clamping devices 3, 4 are driven so as to move the element 50 to a second work position in which the latter is subjected to the second end cut.

The element 50 is then stably and correctly positioned during the two following machinings so as to ensure the precision and accuracy of the machinings. As it is not necessary to dismantle from the supporting means 3, 4, 5 the element 50 and thus reposition the latter, positioning errors are thus avoided that could compromise the precision and quality of the machining.

This advantage is also obtained from performing further machinings on the element 50 for completion of the element 50 by the milling unit 8.

As the element 50 can be rotated around the first rotation axis A and the milling unit 8 can be moved along the two respective advancing directions Y1, Z1, it is possible to perform the aforesaid machinings on all the sides of the element 50.

Using the machine tool 1 thus avoids the need to remove the element to be machined 50 from the machine tool 1 to position the element 50 on a further finishing machine tool, with considerable saving of time and costs.

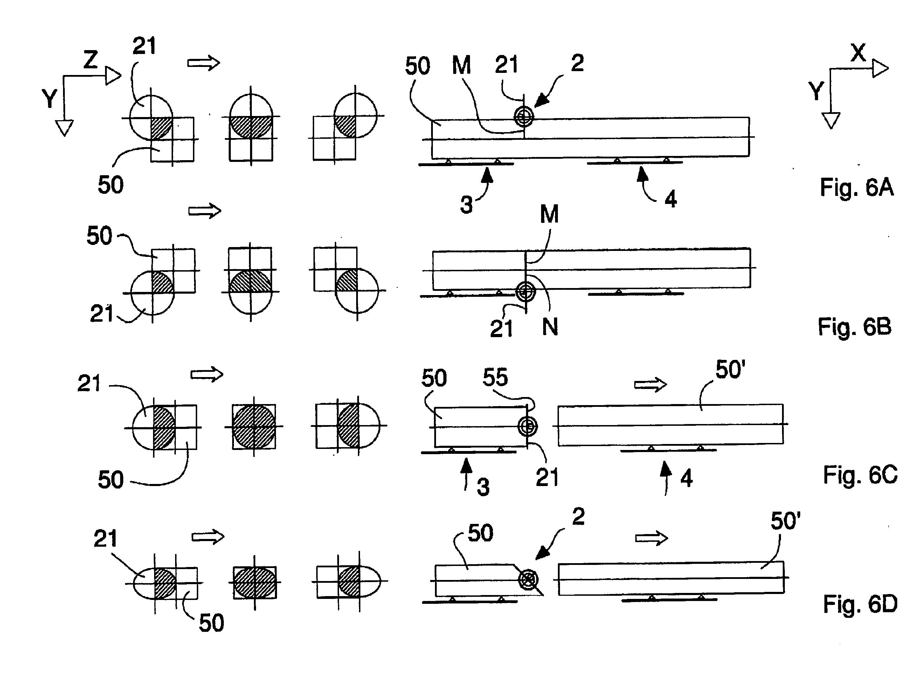

As illustrated in Figures 6A to 6D, the machine tool 1 further enables straight and tilted cuts of elongated elements 50 to be obtained in two actions or passes that have a cross section of significant dimensions, without the need to use blades of large dimensions.

In a first step the disc blade 21 is driven in the second advancing direction Z to run a first transverse cut M on the element 50, the latter being supported and clamped, for example, by the first clamping device 3 and by the second clamping device 4 (Figure 6A).

In a second step, the disc blade 21 performs a second transverse cut N, that is complementary to said first transverse cut M (Figure 6B), so as to cut said element 50 into two distinct portions (Figure 6C).

Before the second step, the blade 21, which has been appropriately moved away from the element 50, is moved along the first advancing direction Y by a set amount that is the same as or half the transverse dimension of said element 50 according to said first advancing direction Y.

With reference to Figures 6A-6C, the first cut M is a cut that is straight or orthogonal to a longitudinal axis of the element 50 and is performed on an upper portion thereof.

The disc blade 21 is then lowered by said set amount to perform the second cut N on the lower portion.

It is nevertheless provided that the first transverse cut M and the second transverse cut N can be performed respectively on the lower portion and on the upper portion of the element 50.

The direction of the movements of the disc blade 21 along the second advancing direction Z during the first cut M and the second cut N can be concordant, as illustrated in Figures 6A and 6B, or discordant.

After the cut, the second clamping device 4 removes from the cutting unit 2 a portion 50' of the element to be machined obtained after cutting.

A third step is provided in which the disc blade 21, of the flangeless type, proceeds to again pass over the cutting surface 55 obtained from the cuts M, N to make a better and more homogenous surface finish and a more precise geometry, both in the case of a straight cut (Figure 6C) and of a tilted cut (Figure 6D).

The transverse cuts M, N can be coplanar or incident so as to form a solid angle. In this latter case, the step movement of the element 50 according to the first movement direction X is associated with the movement of the cutting unit 2 in a first advancing direction Y.

It should be noted that in order to be able to make the cuts disclosed above it is possible both to move the element 50 along the first movement direction X and the cutting unit 2 along the second movement direction X1 towards one another and alternatively to maintain the element 50 to be machined fixed and to move only the cutting unit 2 along the second movement direction X1.

Owing to the invention it is thus possible to perform straight or angled transverse cuts of elements 50 having cross sections of significant dimensions, without needing to use disk blades 21 of appropriate dimensions and/or without having to reposition the element 50 to be cut on the supporting means 3, 4 and 5 of the machine tool 1. In fact, the cut can be performed in two successive actions or passes of the disc blade 21 having dimensions that are less than those required to perform a cut with a single pass.

The invention thus enables the managing costs of the machine tool to be reduced as disc blades 21 of large dimensions are not required, in function of the measurements of the elements 50 to be machined. Further, as it is not necessary to replace the cutting tool, it is possible to increase productivity compared with known machine tools.

Owing to the invention, it is further possible to perform machinings on the element 50 to be machined, for example longitudinal cuts, simply by moving the element 50 and maintaining the disc blade 21 in a preset position.

It is further possible to move the disc blade 21 in step with the movement of the element 50 to be machined, at least according to the first advancing direction Y that is orthogonal to the first movement direction X. This enables particular machinings to be performed such as tilted or angled, complete or partial cuts of the element 50 without the need to reposition the latter on the machine tool 1, which performs the machining. This enables more precise and accurate machinings to be obtained, avoiding mounting and positioning errors.

It should be noted that the possibility of moving the cutting unit 2 also along the second movement direction X1, which is substantially parallel to a longitudinal axis of the element 50 to be machined, enables elements 50 to be machined that have a greater longitudinal extent for the same total dimensions of the machine tool 1, compared with elements s that can be machined by machine tools of known type.

The possibility of moving the cutting unit 2 along the second movement direction X1 enables a machine tool 1 to be available that extends less in length than do machine tools of known type.

Owing to the invention, it is lastly possible to perform a series of different and successive workings on an element 50 to be machined without the need to dismantle and therefore reposition said element 50 on the machine tool 1. This enables machinings that are more precise and accurate to be obtained, as errors and imprecisions are avoided that are due to successive mounting and positioning.

Further, the possibility of moving supporting means 3, 4 and 5 of the machine tool 1 automatically enables the aforesaid machinings on the element 50 to be performed rapidly without the manual intervention of operators.

## Claims

1. Machine tool for machining elongated elements (50), comprising a cutting unit (2) for rotatably supporting a disc blade (21), a plurality of supporting means (3, 4, 5) of an element (50) to be machined, driving means (25, 26, 27, 34, 44, 54, 64) for moving said cutting unit (2) and said supporting means (3, 4, 5) so as to cause an interaction between said element (50) to be machined and said disc blade (21), said plurality of supporting means (3, 4, 5) being such as to enable said element (50) to be machined to perform a rotation around a first rotation axis (A) coinciding with or parallel to a longitudinal axis of said element (50), said cutting unit (2) being movable along a first advancing direction (Y) that is substantially orthogonal to said first rotation axis (A) and along a second advancing direction (Z) that is substantially orthogonal to said first advancing direction (Y) and to said first rotation axis (A), said cutting unit (2) comprising a supporting arm (22) suitable for rotatably supporting said disc blade (21) and mounted rotatably around a second rotation axis (C) substantially orthogonal to said first rotation axis (A), **characterized in that** each supporting means of said plurality of supporting means (3, 4, 5) is movable by said driving means (34, 44, 54) along a first movement direction (X) that is substantially parallel to said first rotation axis (A), and **in that** said cutting unit is (2) supported by frame means (10), said frame means (10) being connected to base means (11) of said machine so as to be movable by said driving means (64) along a second movement direction (X1) that is substantially parallel to said first movement direction (X).

2. Machine according to claim 1, wherein said driving means comprises motor means (64, 25, 26) for moving said cutting unit (2) along said first advancing direction (Y), along said second advancing direction (Z) and along said second movement direction (X1).

3. Machine according to claim 2, wherein said motor means comprises first motor means (64) suitable for moving said cutting unit (2) along said second movement direction (X1).

4. Machine according to claim 2 or 3, wherein said motor means comprises second motor means (25) and third motor means (26) for moving said cutting unit (2) respectively along said first advancing direction (Y) and said second advancing direction (Z).

5. Machine according to claim 3 or 4, comprising transmission means (63) interposed between said first motor means (64) and said frame means (10).

6. Machine according to claim 5, wherein said transmission means (63) comprises rack means (65) fixed to said base means (11) and engaged by pinion means (66) rotated by said first motor means (64).

7. Machine according to claim 3 or 4, wherein said first motor means (64) comprises linear motor means.

8. Machine according to any one of preceding claims, comprising connecting means (12) suitable for connecting said cutting unit (2) to said frame means (10).

9. Machine according to claim 8, wherein said connecting means (12) comprises a first carriage (13) and a second carriage (14), said first carriage (13) being slidably connected to said frame means (10) along said first advancing direction (Y) and arranged for slidably supporting said second carriage (14) along said second advancing direction (Z).

10. Machine according to any preceding claim, wherein said second rotation axis (C) is substantially orthogonal to a revolution axis (D) of said disc blade (21) and substantially parallel to said second advancing direction (Z).

11. Machine according to any preceding claim, further comprising a milling unit (8) suitable for performing machinings on said element (50) to be machined and movable along a third advancing direction (Y1) and a fourth advancing direction (Z1).

12. Machine according to claim 11, wherein said milling unit (8) is slidably connected to said frame means (10).

## Patentansprüche

1. Maschinenwerkzeug zum Bearbeiten von länglichen Elementen (50) mit einer Schneideeinheit (2) zum rotierbaren Tragen einer Scheibenklinge (21), mit einer Vielzahl von Trägermitteln (3, 4, 5) für ein zu bearbeitendes Element (50), mit Antriebsmitteln (25, 26, 27, 34, 44, 54, 64) zum Bewegen der Schneideeinheit (2) und der Trägermittel (3, 4, 5), um so eine Zusammenwirkung zwischen dem zu bearbeitenden Element (50) und der Scheibenklinge (21) zu bewirken, wobei die Vielzahl von Trägermitteln (3, 4, 5) derart ausgestaltet ist, um es dem zu bearbeitenden Element (50) zu ermöglichen, eine Rotation um eine erste Rotationsachse (A) zu vollführen, die mit einer Längsachse des Elements (50) zusammenfällt oder parallel zu dieser ist, wobei die Schneideeinheit (2) entlang einer ersten Vorschubrichtung (Y) beweglich ist, die im Wesentlichen senkrecht zu der ersten Rotationsachse (A) und entlang einer zweiten Vorschubrichtung (Z), die im Wesentlichen orthogonal zu der ersten Vorschubrichtung Y und zu der ersten Rotationsachse (A) ist, wobei die Schneideeinheit (2) einen Trägerarm (22) aufweist, der dafür geeignet ist, die Scheibenklinge (21) rotierbar zu tragen und um eine zweite Rotationsachse (C), die im Wesentlichen senkrecht zu der ersten Rotationsachse (A) ist, rotierbar angeordnet ist, **dadurch gekennzeichnet, dass** jedes Trägermittel von der Vielzahl von Trägermitteln (3, 4, 5) durch die Antriebsmittel (34, 44, 54) entlang einer ersten Bewegungsrichtung (X) bewegbar ist, die im Wesentlichen parallel zu der ersten Rotationsachse (A) ist, und dass die Schneideeinheit (2) von Rahmenmitteln (10) getragen ist, wobei die Rahmenmittel (10) mit Basismitteln (11) der Maschine verbunden sind, um so von den Antriebsmitteln (64) entlang einer zweiten Bewegungsrichtung (X1) bewegbar zu sein, die im Wesentlichen parallel zu der ersten Bewegungsrichtung (X) ist.

2. Maschine nach Anspruch 1, wobei die Antriebsmittel Motormittel (64, 25, 26) aufweisen, um die Schneideeinheit (2) entlang der ersten Vorschubrichtung (Y), entlang der zweiten Vorschubrichtung (Z) und entlang der zweiten Bewegungsrichtung (X1) zu bewegen.

3. Maschine nach Anspruch 2, wobei die Motormittel erste Motormittel (64) aufweisen, die dafür geeignet sind, die Schneideeinheit (2) entlang der zweiten Bewegungsrichtung (X1) zu bewegen.

4. Maschine nach Anspruch 2 oder 3, wobei die Motormittel zweite Motormittel (25) und dritte Motormittel (26) zum Bewegen der Schneideeinheit (2) aufweisen, und zwar jeweils entsprechend entlang der ersten Vorschubrichtung (Y) und der zweiten Vorschubrichtung (Z).

5. Maschine nach Anspruch 3 oder 4, mit Übertragungsmitteln (63), die zwischen den ersten Motormitteln (64) und den Rahmenmitteln (10) angeordnet sind.

6. Maschine nach Anspruch 5, wobei die Übertragungsmittel (63) Gestellmittel (65) aufweisen, die an den Basismitteln (11) angeordnet sind und mit Antriebsradmitteln (66) zusammenwirken, die von den ersten Motormitteln (64) rotiert werden.

7. Maschine nach Anspruch 3 oder 4, wobei die ersten Motormittel (64) lineare Motormittel aufweisen.

8. Maschine nach einem der vorhergehenden Ansprüche, mit Verbindungsmitteln (12), die dafür ausgebildet sind, die Schneideeinheit (2) mit den Rahmenmitteln (10) zu verbinden.

9. Maschine nach Anspruch 8, wobei die Verbindungsmittel (12) ein erstes Fahrteil (13) und ein zweites Fahrteil (14) aufweisen, wobei das erste Fahrteil (13) verschiebbar mit den Rahmenmitteln (10) entlang der ersten Vorschubrichtung (Y) verbunden ist und so angeordnet ist, um das zweite Fahrteil (14) entlang der zweiten Vorschubrichtung (Z) verschiebbar zu tragen.

10. Maschine nach einem der vorhergehenden Ansprüche, wobei die zweite Rotationsachse (C) im Wesentlichen senkrecht zu einer Umdrehungsachse (D) der Scheibenklinge (21) ist und im Wesentlichen parallel zu der zweiten Vorschubrichtung (Z).

11. Maschine nach einem der vorhergehenden Ansprüche, ferner mit einer Bearbeitungseinheit (8), die dafür ausgebildet ist, um Bearbeitungen an dem zu bearbeitenden Element (50) durchzuführen und entlang einer dritten Vorschubrichtung (Y1) und einer vierten Vorschubrichtung (Z1) bewegbar ist.

12. Maschine nach Anspruch 11, wobei die Bearbeitungseinheit (8) verschiebbar mit den Rahmenmitteln (10) verbunden ist.

## Revendications

1. Machine-outil pour usiner des éléments allongés (50), comprenant une unité de coupe (2) pour porter de manière rotative une lame circulaire (21), une pluralité de moyens supports (3, 4, 5) d'un élément (50) à usiner, des moyens d'entraînement (25, 26, 27, 34, 44, 54, 64) pour déplacer ladite unité de coupe (2) et lesdits moyens supports (3, 4, 5) afin de provoquer une interaction entre ledit élément (50) à usiner et ladite lame circulaire (21), ladite pluralité de moyens supports (3, 4, 5) étant telle qu'elle permet audit élément (50) à usiner d'effectuer une rotation autour d'un premier axe de rotation (A) coïncidant avec un axe longitudinal dudit élément (50) ou parallèle à celui-ci, ladite unité de coupe (2) étant mobile le long d'une première direction d'avance (Y) qui est sensiblement orthogonale audit premier axe de rotation (A) et le long d'une deuxième direction d'avance (Z) qui est sensiblement orthogonale à ladite première direction d'avance (Y) et audit premier axe de rotation (A), ladite unité de coupe (2) comprenant un bras support (22) convenant pour soutenir de manière rotative ladite lame circulaire (21) et monté de manière rotative autour d'un deuxième axe de rotation (C) sensiblement orthogonal audit premier axe de rotation (A), **caractérisée en ce que** chaque moyen support de ladite pluralité de moyens supports (3, 4, 5) peut être déplacé par lesdits moyens d'entraînement (34, 44, 54) le long d'une première direction de mouvement (X) qui est sensiblement parallèle audit premier axe de rotation (A), et **en ce que** ladite unité de coupe (2) est soutenue par des moyens formant châssis (10), lesdits moyens formant châssis (10) étant reliés à des moyens formant base (11) de ladite machine de façon à pouvoir être déplacés par lesdits moyens d'entraînement (64) le long d'une deuxième direction de mouvement (X1) qui est sensiblement parallèle à ladite première direction de mouvement (X).

2. Machine selon la revendication 1, dans laquelle lesdits moyens d'entraînement comprennent des moyens moteurs (64, 25, 26) pour déplacer ladite unité de coupe (2) le long de ladite première direction d'avance (Y), le long de ladite deuxième direction d'avance (Z) et le long de ladite deuxième direction de mouvement (X1).

3. Machine selon la revendication 2, dans laquelle lesdits moyens moteurs comprennent des premiers moyens moteurs (64) convenant pour déplacer ladite unité de coupe (2) le long de ladite deuxième direction de mouvement (X1).

4. Machine selon la revendication 2 ou 3, dans laquelle lesdits moyens moteurs comprennent des deuxièmes moyens moteurs (25) et des troisièmes moyens moteurs (26) pour déplacer ladite unité de coupe (2) respectivement le long de ladite première direction d'avance (Y) et de ladite deuxième direction d'avance (Z).

5. Machine selon la revendication 3 ou 4, comprenant des moyens de transmission (63) interposés entre lesdits premiers moyens moteurs (64) et lesdits moyens formant châssis (10).

6. Machine selon la revendication 5, dans laquelle lesdits moyens de transmission (63) comprennent des moyens à crémaillère (65) fixés auxdits moyens formant base (11) et en prise avec des moyens formant pignons (66) mis en rotation par lesdits premiers moyens moteurs (64).

7. Machine selon la revendication 3 ou 4, dans laquelle lesdits premiers moyens moteurs (64) comprennent des moyens moteurs linéaires.

8. Machine selon l'une quelconque des revendications précédentes, comprenant des moyens de raccordement (12) convenant pour relier ladite unité de coupe (2) audits moyens formant châssis (10).

9. Machine selon la revendication 8, dans laquelle lesdits moyens de raccordement (12) comprennent un premier chariot (13) et un deuxième chariot (14), ledit premier chariot (13) étant relié de manière coulissante auxdits moyens formant châssis (10) le long de ladite première direction d'avance (Y) et agencé pour soutenir de manière coulissante ledit deuxième chariot (14) le long de ladite deuxième direction d'avance (Z).

10. Machine selon l'une quelconque des revendications précédentes, dans laquelle ledit deuxième axe de rotation (C) est sensiblement orthogonal à un axe de révolution (D) de ladite lame circulaire (21) et sensiblement parallèle à ladite deuxième direction d'avance (Z).

11. Machine selon l'une quelconque des revendications précédentes, comprenant de plus une unité de fraisage (8) convenant pour effectuer des usinages sur ledit élément (50) à usiner et mobile le long d'une troisième direction d'avance (Y1) et d'une quatrième direction d'avance (Z1).

12. Machine selon la revendication 11, dans laquelle ladite unité de fraisage (8) est relié de manière coulissante auxdits moyens formant châssis (10).
